# EUROPÄISCHE PATENTSCHRIFT

(11) **EP 0 318 977 B1**
(45) Veröffentlichungstag und Bekanntmachung des Hinweises auf die Patenterteilung: **15.09.1993**
(21) Anmeldenummer: 88120013.3
(22) Anmeldetag: 30.11.1988
(51) Int. Cl.: F16D 1/08

(54) **Spannvorrichtung**
Tightening device
Dispositif de serrage

(30) Priorität: 01.12.1987 DE 3740706
(43) Veröffentlichungstag der Anmeldung: 07.06.1989
(73) Patentinhaber: VMA-NC Mess- und Antriebstechnik GmbH, D-63814 Kleinostheim (DE)
(72) Erfinder: Hasenstab, Werner, D-8752 Mainaschaff (DE); Seckendorf, Monika, D-8752 Mainaschaff (DE); Hasenstab, Gabi, D-8752 Mainaschaff (DE)
(74) Vertreter: Köster, Hajo, Dr.

(56) Entgegenhaltungen:
- DE-B- 1 206 668
- DE-B- 2 322 831
- FR-A- 850 824
- FR-A- 957 526
- FR-A- 2 029 116
- FR-A- 2 191 654
- GB-A- 1 066 211
- PATENT ABSTRACTS OF JAPAN, Band 8, Nr. 182 (M-319)[1619], 22. August 1984;& JP-A-59 73 626 (MASANORI MOCHIZUKI) 25-04-1984

## Beschreibung

Die Erfindung betrifft eine Spannvorrichtung zum reibschlüssigen Verbinden einer Welle mit einer Nabe, aufgebaut aus einer mit einer zentralen axialen Bohrung zur Aufnahme einer Welle ausgestattenen Doppelkonusbuchse, einem Außenteil mit einer zentralen axialen Bohrung zum Umspannen von Welle und Doppelkonusbuchse und einer Bundschraube, die mittels eines Außengewindes in ein korrespondierendes, in der Bohrung des Außenteils vorgesehenes Innengewinde einschraubbar ist, wobei auf der Außenmantelfläche der Doppelkonusbuchse eine nabenseitige Konusfläche und eine bundschraubenseitige Konusfläche ausgebildet sind,
ein Abschnitt der Innenwand der Bohrung des Außenteils als ein zu der nabenseitigen Konusfläche der Doppelkonusbuchse komplementärer Innenkonus ausgestaltet ist, und
die Bundschraube eine zur bundschraubenseitigen Konusfläche komplementär konische Gegenfläche besitzt und darüber beim Einschrauben die Doppelkonusbuchse axial verspannt.

Es sind bereits Spannvorrichtungen bekannt, mit deren Hilfe beispielsweise eine Welle oder eine Achse spanntechnisch mit einer Nabe verbunden werden, wobei letztere auch Teil eines Kettenrades oder einer Kupplung sein kann bzw. dort integriert sein kann.

Aus der GB-PS 1 050 962 ist beispielsweise eine Spannvorrichtung bekannt, bei der eine zylindrische Welle mittels einer Buchse mit einem Außenteil verbunden wird, wobei das Außenteil wiederum an einem beliebigen Maschinenelement befestigt sein kann.

Die Buchse weist eine zentrale axiale zylindrische Bohrung auf, deren Durchmesser geringfügig größer ist als derjenige der Welle. Die Buchse ist somit auf die Welle aufschiebbar.

Die bekannte Buchse besitzt eine einfach konisch gestaltete radiale Außenmantelfläche und kommt mittels dieser mit einem komplementären Innenkonus in reibschlüssige Anlage. Der Innenkonus befindet sich in einer zentralen Bohrung eines Außenteils, welches die Nabe und die Buchse umspannt. Der Innenkonus stellt einen Teil der Innenwandung der zentralen Bohrung des Außenteils dar.

Um die konisch gestaltete radiale Außenfläche der Buchse mit dem Innenkonus in reibschlüssigen Kontakt zu bringen, wird eine Bundschraube zum Einsatz gebraucht, welche beim Einschrauben die Buchse axial verschiebt, wodurch die Buchse und das Außenteil aufgrund der konusförmigen Kontaktflächen gleichzeitig radial nach innen bzw. nach außen gepreßt werden. Dadurch wird eine reibschlüssige Verbindung hergestellt.

Bei dieser bekannten Spannvorrichtung drückt die Bundschraube mit ihrer Stirnfläche, die senkrecht zur Achse der Welle und somit auch der Buchse angeordnet ist, gegen eine ebenfalls senkrecht zu der genannten Achse angeordnete Kreisringfläche der Buchse. Mit anderen Worten, die Bundschraube übt nur eine axiale, jedoch keine radiale Kraft auf die Buchse aus. Dies ist nachteilig, denn die durch die Bundschraube ausgeübte Kraft trägt somit nicht zum Verpressen von Buchse und Welle bei. Letztere Kraft wird lediglich durch das Zusammenwirken vom Innenkonus des Außenteils mit der konisch gestalteten Außenmantelfläche der Buchse "aufgebracht".

Bedingt durch die geschilderte Ausgestaltung der Bundschraube und der Buchse läßt der Reibschluß zu wünschen übrig. Auch neigen derartige bekannte Kupplungen bei hohen Tourendrehzahlen dazu, sich zu lösen und zu lockern, so daß entsprechende Sicherungen, beispielsweise Sicherungsstifte, vorgesehen werden müssen.

Es sind auch Spannvorrichtungen bekannt, bei denen die Buchse mit Hilfe von Spannschrauben mit dem dazugehörigen Konus verspannt werden. Diese Spannschrauben greifen durch eine Mehrzahl axialer Bohrungen an der Peripherie der Buchse hindurch in eine Mehrzahl entsprechend gestalteter Innengewinde des Außenteils.

An diesen bekannten Spannvorrichtungen ist jedoch nachteilig, daß aufgrund der relativ langen Schrauben entsprechend axiale Einbaufreiräume benötigt werden. Zudem bedingt die Montage das möglichst gleichmäßige Anziehen einer Mehrzahl von Schrauben. Dies ist zeitraubend und setzt eine gewisse Qualifikation des Monteurs voraus. Zudem ist die Demontage in der Regel nicht einfach durch Herausschrauben der Spannschrauben zu erreichen. Vielmehr ist das Losschlagen mit einem geeigneten Werkzeug oder das Einschrauben von Abdrückschrauben in separate Abdrückgewinde erforderlich.

Auch aus der DE-B-23 22 831 ist ein Spannsatz bekannt, der über mehrere, planetenartig angeordnete Innensechskantspannschrauben gespannt wird. Dieser bekannte Spannsatz besitzt einen Innenspannring mit zwei äußeren Konusflächen unterschiedlicher Steigung. Auf der flacheren Konusfläche sitzt ein mit einer korrespondierenden Konusbohrung ausgestatteter Außenspannring, während die steilere Konusfläche einen Zentrierring mit korrespondierender Konusbohrung aufweist. Durch Anziehen der genannten Innensechskantschrauben, die den Außenspannring in Bohrungen, den Zentrierring in Gewindebohrungen durchdringen, wird der Spannsatz zu einer geschlossenen, einbaufertigen Einheit zusammengehalten und ist spannbar.

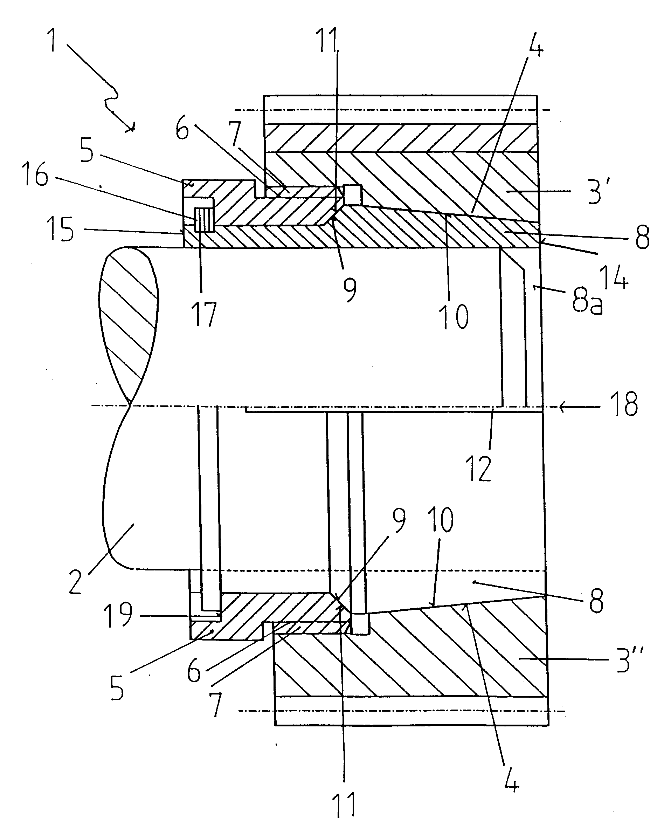

Ein Spannsatz mit einer Doppelkonusbuchse ist ferner aus der FR-A-850 824 bekannt. Die dort in der Fig. 6 gezeigte Doppelkonusbuchse besitzt zwei äußere Konusflächen mit in etwa gleicher Steigung. Diese Doppelkonusbuchse ist in eine axiale Bohrung eingesetzt, die mit einer, zu einer der äußeren Konusflächen der Doppelkonusbuchse komplementären Innenkonusfläche ausgestattet ist. In diese Bohrung kann ferner eine Schraube eingeschraubt werden, die eine zentrale Bohrung mit einer Innenkonusfläche besitzt, die komplementär konisch ist zur zweiten äußeren Konusfläche der Doppelkonusbuchse. Beim Einschrauben dieser Schraube wird der Spannsatz gespannt.

Aufgabe der vorliegenden Erfindung ist es, eine Spannvorrichtung bereitzustellen, die einen geringen Platzbedarf hat, einfach zusammenfügbar und wieder lösbar ist und mit der eine hohe Flächenpressung erzielt werden kann.

Gelöst wird diese Aufgabe durch eine dattungsgemäße Spannvorrichtung, die dadurch gekennzeichnet ist, daß die bundschraubenseitige Konusfläche der Doppelkonusbuchse steiler ist als die nabenseitige Konusfläche und daß an der Doppelkonusbuchse Anschlagmittel vorhanden sind, gegen die die Bundschraube beim Herausdrehen aus dem Außenteil in Anschlag kommt und mittels derer die Doppelkonusbuchse aus dem Außenteil gelöst wird.

Die erfindungsgemäße Spannvorrichtung besitzt somit eine in etwa zylindrische Buchse mit einer zentralen axialen Bohrung zur Aufnahme einer Welle oder einer Achse. Diese Bohrung hat einen geringfügig größeren Innendurchmesser als die Welle bzw. Achse und kann somit darauf axial verschoben werden.

Zumindest ein Bereich bzw. Abschnitt der radialen Außenmantelfläche dieser Buchse ist als Doppelkonus ausgestaltet. Der Außendurchmesser der Konen nimmt von axial außen nach axial innen zu.

Die nabenseitige Konusfläche bzw. der nabenseitige Konus ist dabei flacher als die bundschraubenseitige Konusfläche bzw. der bundschraubenseitige Konus. Die nabenseitige Konusfläche beginnt zweckmäßigerweise an dem freien, nabenseitigen Ende der Doppelkonusbuchse und erstreckt sich bis etwa "zur Mitte" der Doppelkonusbuchse . Axial in Richtung Bundschraube schließt sich dann die bundschraubenseitige Konusfläche an. Da letztere steiler ist, erstreckt sie sich nur über eine geringere axiale Strecke als die nabenseitige Konusfläche. Die Doppelkonusbuchse ist zweckmäßigerweise vom "Fuß" der bundschraubenseitigen Konusfläche bis zum bundschraubenseitigen Ende außen zylindrisch ausgestaltet.

Die Welle bzw. Achse ragt zusammen mit der aufgesetzten Doppelkonusbuchse in eine zentrale axiale "runde" Bohrung in dem Außenteil hinein und wird somit von letzterem umspannt. Die Bohrung im Außenteil ist über einen gewissen axialen Bereich als Innenkonus gestaltet, der eine zur nabenseitigen Konusfläche komplementär konische Gestalt besitzt. Beim axialen Verspannen der Doppelkonusbuchse kommt diese mit ihrer nabenseitigen Konusfläche gegen den genannten Innenkonus in Anlage und wird damit flächenverpreßt.

Das bundschraubenseitige Ende der Innenbohrung des Außenteils ist in etwa zylindrisch ausgestaltet, wobei in der Innenwandung ein Gewinde vorgesehen ist, das mit einem Gewinde auf der Außenmantelfläche der Bundschraube zusammenwirkt.

Die Bundschraube besitzt eine zur bundschraubenseitigen Konusfläche der Buchse komplementär konische Gegenfläche, die zweckmäßigerweise an der Stirnseite der Bundschraube angeordnet ist. Die Neigung dieser Gegenfläche und natürlich auch die Neigung der bundschraubenseitigen Konusfläche der Doppelkonusbuchse ist steiler als die Neigung der nabenseitigen Konusfläche der Doppelkonusbuchse.

Durch Festdrehen der Bundschraube wird bewirkt, daß zuerst der flachere Konus der Doppelkonusbuchse den Formschluß mit seinem konisch komplementär gestalteten Innenkonus des Außenteils herstellt.

Erst beim weiteren Hineinschrauben der Bundschraube wird dann der steilere Konus (bundschraubenseitige Konusfläche der Doppelkonusbuchse/komplementär konische Gegenfläche der Bundschraube) reib- und formschlüssig festgepreßt. Umgekehrt wird beim Lösen der erfindungsgemäßen Spannvorrichtung zuerst der steilere Konus freigesetzt, wodurch die Bundschraube sofort lose auf dem steileren Konus drehbar wird.

Die erfindungsgemäße Spannvorrichtung besteht trotz ihrer vielen Vorteile aus verblüffend wenigen Elementen. Bedingt durch die hohen Reibwerte der erfindungsgemäßen Spannvorrichtung und bedingt somit durch die hohe Flächenpressung können hohe Drehmomente übertragen werden.

Die erfindungsgemäße Spannvorrichtung ermöglicht zudem eine einfache raum- und kostensparende Montage bzw. Demontage mit handelsüblichen Werkzeugen. Umständliches Drehen während der Montage entfällt. Auch ist kein aufwendiges Lösen mittels Abdrückschrauben erforderlich. Auch ein unfachmännisches Losschlagen ist nicht nötig.

Bei einer bevorzugten Ausführungsform sind die Neigungen der bundschraubenseitigen Konusfläche und der konischen Gegenfläche gleich und können beliebige Werte annehmen. Bevorzugt sind jedoch Werte von 45°°± 5°. Unter Neigung wird dabei im Rahmen der vorliegenden Unterlagen der Winkel zwischen der Achse der Welle bzw. Doppelkonusbuchse und der Konusmantelfläche der jeweiligen Konen verstanden. Die entsprechenden Konusflächen sind bei "zylindrischer" Ausgestaltung von Welle, Doppelkonusbuchse und Schraube und Innenkonus bzw. Innenbohrung des Außenteils radial umlaufend.

Nach einer weiterhin bevorzugten Ausführungsform besitzt die nabenseitige Konusfläche der Doppelkonusbuchse eine Neigung von 3° ± 1°. Bei den genannten Wertenwerdenoptimale Reibwerte erzielt, so daß auf weitere Sicherungselemente für die Doppelkonusbuchse bzw. für die Bundschraube verzichtet werden kann. Werte von 2° bis 15° können jedoch Anwendung finden.

Das Außenteil kann im übrigen ein Außenring, der in eine Nabe oder etwas ähnliches eingesetzt ist, oder die Nabe selbst sein.

Nach einer weiterhin bevorzugten Ausführungsform besitzen die nabenseitige Konusfläche der Doppelkonusbuchse und der Innenkonus eine geringfügig unterschiedliche Neigung, wobei die Neigungsdifferenz insbesondere 5 Min. ± 3 Min. beträgt. Dabei ist insbesondere der Innenkonus steiler als die nabenseitige Konusfläche. Weiterhin weist die Doppelkonusbuchse mindestens einen axial verlaufenden Längsschlitz der weiter unten näher beschriebenen Art auf.

Durch diese Ausgestaltung wird eine Selbsthemmung der Doppelkonusbuchse bezüglich des Innenkonus durch eine Flächenpressung erzielt, denn der nabenseitige Konus der Doppelkonusbuchse wird unter Einfluß des Innenkonus radial komprimiert und dadurch gegen-die Welle flächenverpreßt. Gleichzeitig liegt der nabenseitige Konus der Doppelkonusbuchse in der radial komprimierten Form gegen den Innenkonus in Anlage.

Weiterhin sind Anschlagmittel an der Doppelkonusbuchse vorgesehen, die insbesondere am bundschraubenseitigen Ende letzterer angebracht sind. Beim Herausdrehen der Bundschraube kommt diese gegen die Anschlagmittel in Anschlag, nimmt diese bei weiterem Herausdrehen mit und zieht daher auch die Doppelkonusbuchse aus dem Innenkonus heraus.

Vorzugsweise sind die Anschlagmittel derart auf der Doppelkonusbuchse angeordnet, daß die Bundschraube erst dann gegen sie in Anschlag kommt, wenn sich die konische Gegenfläche der Bundschraube bereits von der bundschraubenseitigen Konusfläche der Doppelkonusbuchse gelöst hat. Zweckmäßigerweise ist dies nach einer halben Drehung der Fall, so daß die Bundschraube schon "freiläuft".

Bei den Anschlagmitteln handelt es sich vorzugsweise um einen Seegerring, der in eine außen am nabenabgewandten Ende der Doppelkonusbuchse umlaufende Nut eingreift.

In einer bevorzugten Ausgestaltung der erfindungsgemäßen Spannvorrichtung weist die Doppelkonusbuchse mindestens zwei gegenläufige, um maximal 180° versetzte Längsschlitze auf, die sich jeweils vom axialen Ende bis mindestens über die Mitte der Doppelkonusbuchse erstrecken. Eine besonders bevorzugte Ausgestaltung der Doppelkonusbuchse zeichnet sich durch vier gegenläufige, um jeweils 90° versetzte axiale Längsschlitze aus, die sich jeweils von einem axialen Ende bis nahe ans andere axiale Ende erstrecken.

Die Bundschraube, die man auch als Bundmutter bezeichnen kann, ist vorzugsweise mit einem Feingewinde als Außengewinde versehen, so daß schon ein geringfügiges Verdrehen genügt, um die gewünschte Verspannung der entsprechenden Teile zu erreichen, wobei schon mit relativ kleinen Anzugsdrehmomenten hohe Flächenpressungen erreicht werden können.

Da erfindungsgemäß nur eine zentrale Bundschraube vorgesehen ist, können Mittenversätze der zu verbindenden Teile nahezu ausgeschlossen werden, da die Bundschraube selbst zentrierend wirkt. Dies führt zu optimalen Planlauf- und Rundlaufeigenschaften.

Die erfindungsgemäße Spannvorrichtung ist zudem absolut spielfrei; auch bei hohen dynamischen Belastungen findet kein Ausschlagen statt.

Die erfindungsgemäße Spannvorrichtung wird anhand der folgenden, eine bevorzugte Ausführungsform wiedergebenden Figur näher erläutert.

Die Figur zeigt dabei die erfindungsgemäße Spannvorrichtung 1 im Teilschnitt. Bei der oberhalb der Achse 18 gezeigten Ausführungsform erfolgt die Kraftübertragung über den Außenring 3', während bei derjenigen Ausführungsform, die unterhalb der Achse 18 dargestellt ist, die Kraftübertragung von der Welle 2 direkt auf die Nabe 3'' erfolgt.

Auf die zylindrische Welle 2 ist die Doppelkonusbuchse 8 aufgesetzt; die Doppelkonusbuchse 8 besitzt eine zentrale axiale zylindrische durchgehende Bohrung 8a, deren Innendurchmesser geringfügig größer ist als der Außendurchmesser der Welle 2.

Der Außendurchmesser der Doppelkonusbuchse nimmt vom nabenseitigen Ende 14 aus langsam zu, so daß eine nabenseitige Konusfläche 10 gebildet wird, die radial umläuft. Etwa in der Mitte der Doppelkonusbuchse 8, bezogen auf deren axiale Länge, nimmt der Außendurchmesser der Doppelkonusbuchse zum nabenabgewandten Ende 15 hin ab, und zwar "schneller" als im Bereich der Konusfläche 10. Dieser Bereich stellt die bundschraubenseitige Konusfläche 9 dar, die ebenfalls radial umläuft.

Vom "Fuß" der Konusfläche 9 bis zum nabenabgewandten Ende 15 der Doppelkonusbuchse stellt diese eine Buchse mit zylindrischem Außenmantel dar.

Welle 2 und Doppelkonusbuchse 8 sind in eine im Außenring 3' bzw. in der Nabe 3'' ausgenommene zylindrische Bohrung eingesetzt. Im Bereich der Konusfläche 10 ist die Innenwand der Nabe 3'' bzw. des Außenrings 3 als Innenkonus 4 ausgestaltet mit einer Neigung, die komplementär zur Neigung der Konusfläche 10 ist.

Bundschraubenseitig ist die Innenwand der Bohrung des Außenrings 3' bzw. der Nabe 3'' mit einem Innengewinde 7 ausgestattet, das mit einem Außengewinde 6 auf der Bundschraube 5 zusammenwirkt.

Die Bundschraube 5 besitzt eine axiale zentrale zylindrische Innenbohrung, deren Durchmesser geringfügig größer ist als der Außendurchmesser der Doppelkonusbuchse 8 in diesem Bereich.

Beim Hineinschrauben der Bundschraube 5 in den Außenring 3' bzw. die Nabe 3'' kommt die Bundschraube 5 mit ihrer konischen Gegenfläche 11 gegen die Konusfläche 9 in Anlage und drückt die Doppelkonusbuchse 8 axial in den Außenring 3' bzw. die Nabe 3'' hinein. Dabei kommt die Konusfläche 10 gegen den Innenkonus 4 in Anlage und gleitet auf diesem.

Bedingt durch die Einwirkung der Bundschraube 5 und des Innenkonus 4 wird die Doppelkonusbuchse 8 radial komprimiert, wobei eine Flächenverpressung stattfindet. Um dies zu erleichtern, besitzt die Doppelkonusbuchse 8 vier Längsschlitze 12, die radial um 90° zueinander versetzt angeordnet sind. Diese Schlitze 12 erstrecken sich vom Ende 14 bis kurz vor das nabenabgewandte Ende 15.

Am nabenabgewandten Ende 15 der Doppelkonusbuchse 8 ist ein Seegerring 16 vorgesehen, der in eine Nut 17 eingreift, welche außen auf der Doppelkonusbuchse 8 radial umläuft.Der Innendurchmesser der Innenbohrung der Bundschraube 5 ist auf der nabenabgewandten Seite im übrigen größer als auf der nabenzugewandten Seite. Am Übergang vom größeren zum kleineren Innendurchmesser ist eine Stufe bzw. ein Absatz 19 ausgebildet. Gegen die radial umlaufende Kreisring fläche dieser Stufe 19 kommt der Seegerrng 16 beim Herausschrauben der Bundschraube 5 in Anschlag. Beim weiteren Herausdrehen wird die von der Bundschraube 5 ausgeübte Kraft mittels des Seegerrings 16 auf die Doppelkonusbuchse 8 übertragen, so daß letztere aus dem Innenkonus 4 herausgezogen und daher gelöst wird. Die axiale Länge der Bundschraube 5 von der Stufe 19 bis zum Fuß der Gegenfläche 11 ist dabei kleiner als die axiale Länge der Doppelkonusbuchse 8 vom Fuß der Konusfläche 9 bis zum Seerring 16. Dadurch wird erreicht, daß beim Lösen der Bundschraube 5 und somit beim voneinander Wegbewegen der Gegenfläche 11 von der Konusfläche 9 die Bundschraube 5 "freiläuft" bevor sie gegen den Seegerring 16 in Anschlag kommt. Die Bundschraube 5 hat somit axiales Spiel bezüglich der Doppelkonusbuchse 8, um welche sie übrigens frei umläuft.

Der Außenrand des außerhalb des Außenrings 3' bzw. der Nabe 3'' befindlichen Abschnitts der Bundschraube 5 ist im übrigen als Sechskant ausgestaltet, so daß ein Werkzeug zum Drehen der Bundschraube 5 leicht angesetzt werden kann.

## Patentansprüche

1. Spannvorrichtung zum reibschlüssigen Verbinden einer Welle (2) mit einer Nabe, aufgebaut aus
einer mit einer zentralen axialen Bohrung (8a) zur Aufnahme der Welle (2) ausgestatteten Doppelkonusbuchse (8), einem Außenteil (3) mit einer zentralen axialen Bohrung zum Umspannen von Welle (2) und Doppelkonusbuchse (8) und einer Bundschraube (5), die mittels eines Außengewindes (6) in ein korrespondierendes, in der Bohrung des Außenteils (3) vorgesehenes Innengewinde (7) einschraubbar ist, wobei
auf der Außenmantelfläche der Doppelkonusbuchse (8) eine nabenseitige Konusfläche (10) und eine bundschraubenseitige Konusfläche (9) ausgebildet sind,
ein Abschnitt der Innenwand der Bohrung des Außenteils (3) als ein zu der nabenseitigen Konusfläche (10) der Doppelkonusbuchse (8) komplementärer Innenkonus (4) ausgestaltet ist, und
die Bundschraube eine zur bundschraubenseitigen Konusfläche (9) komplementär konische Gegenfläche (11) besitzt und darüber beim Einschrauben die Doppelkonusbuchse (8) axial verspannt,
dadurch **gekennzeichnet**,
daß die bundschraubenseitige Konusfläche (9) der Doppelkonusbuchse (8) steiler ist als die nabenseitige Konusfläche (10) und
daß an der Doppelkonusbuchse (8) Anschlagmittel (16) vorgesehen sind, gegen die die Bundschraube (5) beim Heraus drehen aus dem Außenteil (3) in Anschlag kommt und mittels derer die Doppelkonusbuchse (8) aus dem Außenteil (3) gelöst wird.

2. Spannvorrichtung nach Anspruch 1,
dadurch **gekennzeichnet**,
daß die Neigungen der bundschraubenseitigen Konusflache (9) und der konischen Gegenfläche (11) gleich sind und 45 plus/minus 5° betragen.

3. Spannvorrichtung nach Anspruch 1 oder 2,
dadurch **gekennzeichnet**,
daß die nabenseitige Konusfläche (10) eine Neigung von 3° plus/minus 1° besitzt.

4. Spannvorrichtung nach mindestens einem der Ansprüche 1 bis 3,
dadurch **gekennzeichnet**,
daß die nabenseitige Konusfläche (10) und der Innenkonus (4) eine geringfügig unterschiedliche Neigung besitzen, wobei die Neigungsdifferenz insbesondere 5' plus minus 3' beträgt und wobei insbesondere der Innenkonus (4) steiler ist.

5. Spannvorrichtung nach mindestens einem der vorhergehenden Ansprüche,
dadurch **gekennzeichnet**,
daß die Doppelkonusbuchse (8) mindestens einen axial verlaufenden Längsschlitz (12) besitzt, der die Wandung (13) der Doppelkonusbuchse (8) zumindest bereichsweise vollständig durchsetzt.

6. Spannvorrichtung nach Anspruch 5,
**gekennzeichnet** durch
mehrere sich vom nabenseitigen Ende (14) der Doppelkonusbuchse (8) bis kurz vor das nabenabgewandte Ende (15) erstreckende Längsschlitze (12).

7. Spannvorrichtung nach Anspruch 5,
**gekennzeichnet** durch
gegenläufige Längsschlitze (12), die sich insbesondere abwechselnd vom nabenseitigen Ende (14) bis kurz vor das nabenabgewandte Ende (15) und vice versa erstrecken.

8. Spannvorrichtung nach mindestens einem der vorhergehenden Ansprüche,
dadurch **gekennzeichnet**,
daß die Anschlagmittel (16) derart angeordnet sind, daß die Bundschraube (5) erst dann dagegen in Anschlag kommt, wenn sie bereits von der Doppelkonusbuchse (8) gelöst ist und daß die Anschlagmittel insbesondere ein Seegerring (16) sind, der in eine außen am nabeabgewandten Ende (15) der Doppelkonusbuchse (8) umlaufende Nut (17) eingreift.

## Claims

1. A chucking device for frictionally engageable connection of a shaft (2) with a hub, composed of a biconical bush (8) provided with a coaxial bore (8a) for reception of the shaft (2), an outer portion (3) with a coaxial bore for encompassing the shaft (2) and biconical bush (8) and, a colar screw (5) which by means of an outer screw thread (6) is screwable into a corresponding inner screw thread (7) provided in the bore of the outer portion (3), whereby,
on the outer surface of the biconical bush (8) there is formed on a conical surface (10) at the hub end and a conical surface (9) at the collar screw end,
a section of the inner wall of the bore of the outer portion (3) is arranged as an inner cone (4) which is complementary to the conical surface (10) of the biconical bush (8) at the hub end,
and
the collar screw is provided with a conical counter surface (11) which is complementary to the conical surface (9) at the collar screw end, and during screwing in stays thereby the biconical bush axially,
**characterized** in that,
the conical surface (9) at the collar end of the biconical bush (10) is steeper than the conical surface (10) at the hub end, and that the biconical bush (8) is provided with stopper means (16) against which abuts the collar screw (5) during unscrewing out of the outer portion (3) and by means of which the biconical bush (8) can be released from the outer portion (3).

2. A chucking device according to claim 1,
**characterized** in that,
the gradients of the conical surface (9) at the collar screw end and the conical counter surface (11) are identical and amount to 45° plus/minus 5°.

3. A chucking device according to claims 1 or 2,
**characterized** in that,
the conical surface (10) at the hub end has a gradient of 3° plus/minus 1°.

4. A chucking device according to at least one of the claims 1 to 3,
**characterized** in that,
the conical surface (10) at the hub end and the inner cone (4) have a slightly different gradient, whereby the difference of the gradients amounts to, in particular 5' plus minus 3' and, whereby in particular the inner cone (4) is steeper.

5. A chucking device according to at least one of the preceding claims,
**characterized** in that,
the biconical bush (8) is provided with at least one axially extending longitudinal slit (12), which penetrates the wall of the biconical bush (8) continuously along at least a region.

6. A chucking device according to claim 5,
**characterized** in that,
a plurality of longitudinal slits (12) extends from the end (14) of the biconical bush (8) facing the hub to nearly the end (15) facing away from the hub.

7. A chucking device according to claim 5,
**characterized** by,
oppositely directed longitudinal slits (12) which extend, in particular, alternately from the end (14) facing the hub to nearly the end (15) facing away from the hub and vice versa.

8. A chucking device according to at least one of the preceding claims,
**characterized** in that,
the stopper means (16) are arranged such that the collar screw (5) comes into abutment therewith only after it has already been released from the biconical bush (8) and that the stopper means (16) are a Seeger circlip ring, which engages in a groove (17) extending circumferentially outside on the end (15) of the biconical bush (8) facing away from the hub.

## Revendications

1. Dispositif de serrage pour l'assemblage par friction d'un arbre (2) et d'un moyeu, constitue d'un manchon à double cône (8) muni d'un alésage central axial (8a) pour recevoir l'arbre (2), d'une pièce extérieure (3) comportant un alésage central axial pour serrer par l'extérieur l'arbre (2) et le manchon à double cône (8), et d'une vis a collerette (5), qui peut être vissée, au moyen d'un filetage extérieur (6), dans un filetage intérieur (7) correspondant, prévu dans l'alésage de la pièce extérieure (3), étant entendu que,
- sur la surface externe du manchon a double cône (8), sont réalisées une surface conique (10), côte moyeu, et une surface conique (9), côte vis a collerette,
- une partie de la paroi interne de l'alésage de la pièce extérieure (3) est realisée sous la forme d'un cône interleur (4), complémentaire de la surface conique côte moyeu (10) du manchon à double cône (8), et que
- la vis à collerette (5) possède une contre-surface conique (11), complementaire de la surface conique (9) côte vis à collerette, et exerce, au vissage, un serrage axial sur le manchon à double cône (8).
caractérisé en ce que la surface conique (9), côte vis à collerette, présente une inclinaison plus forte que la surface conique (10), côte moyeu, et en ce que, sur le manchon à double cône (8), sont prevus des moyens de butée (16), contre lesquels la vis a collerette (5) vient en butée lors de son dévissage de la pièce extérieure (3), et au moyen desquels le manchon à double cône (8) est libéré de la pièce extérieure (3).

2. Dispositif de serrage suivant la revendication 1. caractérisé en ce que l'inclinaison de la surface conique (9), côté vis à collerette, et l'inclinaison de la contre-surface conique (11) sont les même, et ont une valeur de 45° +/- 5°.

3. Dispositif de serrage suivant la revendication 1 ou la revendication 2, caractérise en ce que la surface conique (10), côte moyeu, présente une inclinaison de 3° +/- 1°.

4. Dispositif de serrage suivant au moins l'une des revendications 1 a 3, caractérisé en ce que la surface conique (10), côte moyeu, et le cône intérieur (4) présentent une inclinaison légèrement différente, cette différence étant, en particulier, de 5' +/- 3' et, qu'en particulier, le cône intérieur (4) présente une inclinaison plus forte.

5. Dispositif de serrage suivant au moins l'une des revendications précédentes, caractérisé en ce que le manchon à double cône (8) possède au moins une fente longitudinale (12), de direction axiale, qui traverse complètement la paroi (13) du manchon à double cône (8), au moins sur une certaine zone.

6. Dispositif de serrage suivant la revendication 5, caractérisé par plusieurs fentes longitudinales (12), s'étendant de l'extremité (14), côte moyeu, du manchon à double cône (8), jusqu'un peu avant son extremité (15), opposée au moyeu.

7. Dispositif de serrage suivant la revendication 5. caractérisé par des fentes longitudinales (12) en sens opposé, s'étendant, en particulier à tour de rôle, de l'extrémité (14), côte moyeu, jusqu'un peu avant l'extrémité (15), opposée au moyeu, et vice versa.

8. Dispositif de serrage suivant au moins l'une des revendications precèdentes, caractérisé en ce que les moyens de butée (16) sont disposes de telle façon que la vis a collerette (5) vient seulement en bute contre eux quand elle est déjà devissée du manchon a double cône (8), et en ce que les moyens de butée sont, en particulier, un anneau de retenue type Seeger (16), qui fait prise dans une rainure circulaire (17) faisant extérieurement le tour de l'extrémité (15) du manchon a double cône (8), opposée au moyeu.
